# EUROPEAN PATENT APPLICATION

(11) **EP 1 975 483 A2**
(43) Date of publication of application: **01.10.2008**
(21) Application number: 08103141.1
(22) Date of filing: 28.03.2008
(51) Int. Cl.: F16K 27/00

(54) **Valve assembly including a non-metallic valve flowbody and an ESD bonding connection**

(30) Priority: 29.03.2007 US 693098
(71) Applicant: Honeywell International Inc., Morristown NJ 07960 (US)
(72) Inventor: Vasquez, John A., Chandler, AZ 85224 (US); Ekstrom, Eric J., Peoria, AZ 85385-5488 (US); Stalling, Richard Honeywell International Inc., Morristown, NJ 07962-2245 (US); Velasquez, Raul, El Mirage, AZ 85335 (US)
(74) Representative: Buckley, Guy Julian

(57) **Abstract**

A valve assembly (100) is provided including a thermoplastic injection molded flow body (102) and an electrical bonding connection (112) providing a bonding path between the thermoplastic injection molded flow body and an external ground point. The thermoplastic injection molded flow body is formed of a resin having a fill matrix suspended therein. The electrical bonding connection (112) includes either a metallic saddle and a retaining bolt, mechanically retaining the metallic saddle to a support rib of the valve flow body or a metallic threaded insert molded into the at least one support rib and a retaining bolt inserted into mating threads of the metallic threaded insert. The electrical bonding connection (112) provides a bonding path between the valve flow body and an external ground point.

## Description

### FIELD OF THE INVENTION

The present invention generally relates to a valve assembly and, more particularly, to a non-metallic valve flow body including an electrical bond for the dissipating static electrical charge.

### BACKGROUND OF THE INVENTION

Many relatively large turbine engines use pneumatic valves for the control of fluid there through. Some specific examples of pneumatic valves utilized in turbine engines include high stage bleed air valves, mid-stage bleed air valves, bleed air isolation valves, pressure regulating and shutoff valves, load control valves, anti-ice valves, trim air valves, and temperature control valves.

In one specific example, an air turbine starter (ATS) within a turbofan jet engine may be coupled to a high pressure fluid source such as compressed air. The flow of compressed air may be controlled by, for example, a valve, such as a pneumatic valve. The flow of compressed air impinges upon a turbine wheel in the ATS causing it to rotate at a relatively high rate of speed. In another specific example, pressure regulating, temperature modulating, and flow control valves may be coupled to a high pressure fluid source such as compressed air taken directly from a turbofan jet engine or an electrically driven turbocompressor for use in heating, ventilating, and air conditioning (HVAC) systems.

It is well-known that pneumatic valve assemblies may be partially disposed within an airway to control flow of a fluid (e.g., air) there through and thus perform any one of a number of functions (e.g., temperature regulation). Valve assemblies of this type typically comprise a valve (e.g., a butterfly valve), including a metallic flowbody, that is coupled by way of a linkage assembly to an actuator. During operation, a static electrical charge may be generated by the valve assembly, which may have various deleterious effects on the turbine engine as well as other aircraft systems. Previous attempts to alleviate this problem include the fastening of a p-clamp and/or ground strap to a portion of pneumatic tubing coupled to the valve assembly and the attachment of the p-clamp and/or ground strap to a remote ground point, such as an associated component. The p-clamp or ground strap provides a discharge path for the static electricity generated in the device. Although this type of bonding or grounding of the valve operates safely, this method can suffer certain drawbacks. For instance, the p-clamp may rotate or move about the pneumatic tubing and/or corrode about the tubing where clamping takes place. This relative motion of the p-clamp or ground strap and corrosion about the clamp can potentially result in an increase in the bonding resistance across the joint and the build up of static electricity within the valve assembly.

Additional attempts have been made to address the buildup of static electrical discharge in a valve assembly by forming valve components, and in particular the valve flow body, from non-metallic composite materials, in lieu of metallic materials. Many attempts were based on the inclusion of a conductive material, such as a metal mesh, that is embedded within the composite material. To form these composite valves, the metallic mesh is aligned and embedded between two separate layers of composite materials. The composite valve is then grounded via a metalized bonding boss or stud, to a remote ground point, such as an airframe ground termination. Of particular concern in the fabrication of these composite valve components, and in particular valve flow bodies, is the multiple fabrication steps that are typically performed, and in particular the layering of the conductive materials within the composite materials.

It should thus be appreciated from the above that it would be desirable to provide an improved non-metallic valve flow body, including a means for bonding the flowbody for the discharge of static electricity during operation of the valve assembly, that is fabricated using a simplified, cost effective method. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

There has now been developed a non-metallic valve assembly configured to dissipate electrostatic discharge. The valve assembly includes a thermoplastic injection molded flow body having at least one inlet port, at least one outlet port, and a flow passage there between. The valve assembly further includes an electrical bonding connection coupled to the thermoplastic injection molded flow body and providing a bonding path between the thermoplastic injection molded flow body and an external ground point.

In a further embodiment, still by way of example only, there is provided a non-metallic valve assembly configured to dissipate electrostatic discharge. The valve assembly includes a thermoplastic injection molded flow body having at least one inlet port, at least one outlet port, and a flow passage there between. The flow body is formed of a resin material having a low surface and low volume resistivity fill matrix suspended therein. The non-metallic valve assembly further includes an electrical bonding connection providing a bonding path between the thermoplastic injection molded flow body and an external ground point.

In still a further embodiment, and still by way of example only, there is provided a non-metallic valve assembly configured to dissipate electrostatic discharge. The valve assembly includes a thermoplastic injection molded flow body having at least one inlet port, at least one outlet port, and a flow passage there between. The thermoplastic injection molded flow body is formed of a resin having a low surface and low volume resistivity fill matrix suspended therein. The valve assembly further includes an electrical bonding connection providing a bonding path between the thermoplastic injection molded flow body and an external ground point. The fill matrix is selected from the group consisting of: a plurality of carbon fibers, a carbon powder, a plurality of stainless steel fiber, nickel-coated graphite, a polymeric material, conductive polymer, and polymeric materials.

Other independent features and advantages of the improved non-metallic valve assembly that is configured to dissipate electrostatic discharge will become apparent from the following detailed description, taken in conjunction with the accompanying drawings which illustrate, by way of example, the principles of the invention.

### BRIEF DESCRIPTION OF THE DRAWINGS

The present invention will hereinafter be described in conjunction with the following drawing figures, wherein like numerals denote like elements, and:

FIG. 1 is a simplified isometric view of a portion of a pneumatic valve assembly according to a first embodiment;

FIG. 2 is a cross-sectional diagram of a portion of the pneumatic valve assembly taken along line 2-2 of FIG. 1;

FIG. 3 is a cross-sectional diagram of a portion of the pneumatic valve assembly taken along line 3-3 of FIG. 1; and

FIG. 4 is a cross-sectional diagram of a portion of the pneumatic valve assembly of an alternate embodiment.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background or the following detailed description.. It should additionally be understood that use of the term "pneumatic" may be interpreted as describing the fluid medium flowing through a pressure vessel, but may also be used to describe the means of actuation of a valve. It should additionally be understood that anticipated by this disclosure is the inclusion of electric, hydraulic, and manual valve actuation.

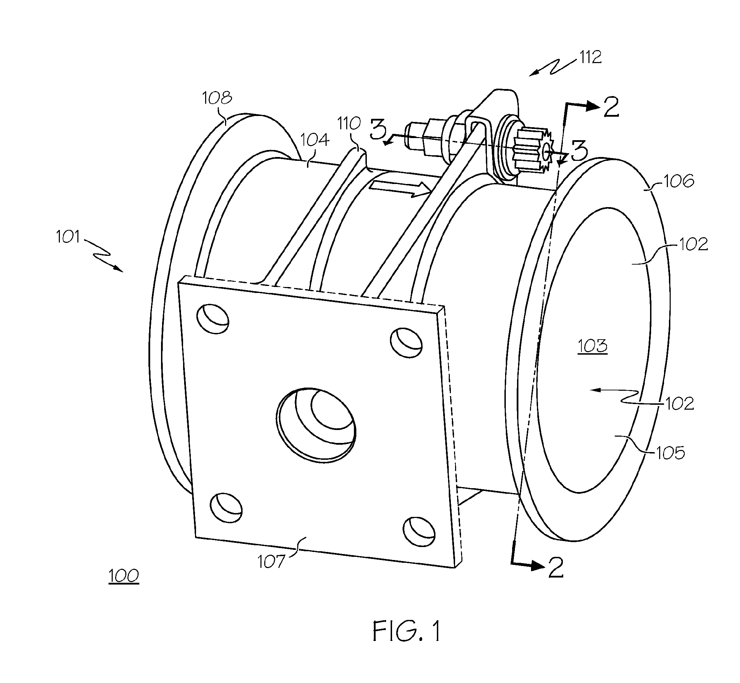

FIG. 1 is a simplified isometric view of a portion of a valve assembly 100. The valve assembly 100 is configured to control the flow of a fluid (e.g., pressurized air) through a flow body 102 defined by a valve housing. The flow body 102 includes an inlet port 101, an outlet port 109, and a flow passage 103 defined there between. It should be understood that while the described embodiment includes simply an inlet port 101 and an outlet port 109, that any number of inlet and outlet ports can be included dependent upon valve design. The valve assembly 100 may be pneumatically operated with a source of pressurized air. Typically, the valve assembly 100 will include an electromechanical actuator assembly (not shown) that is mounted to the flow body 102 at a mounting plate 107. Those having ordinary skill in the art will appreciate from the description that follows that the exact form of the actuator, whether electromechanical, or otherwise, forms no part of the present invention. A valve closure element (not shown) is typically disposed within the valve housing, and more particularly the flow body 102. The valve closure element is coupled to the actuator assembly, and is configured to move between a closed position and an open position. In the closed position, the valve closure element substantially prevents airflow through the flow body 102. In contrast, when the valve closure element is in an open position, air may flow through the flow body 102.

The flow body 102 further includes an inlet flange108 and an outlet flange 106 at opposed ends of the flow body 102. The flanges 106 and 108 provide a means for attachment to additional components (not shown) such as ducting. The flow body 102 further includes by a plurality of support ribs 110 protruding generally perpendicular from the flow body 102. At least one of the plurality of support ribs 110, has attached thereto, or formed therein, an electrical bonding connection 112 that provides a bonding connection between the valve flow body 102 and an aircraft current return network (CRN) or other point of grounding. To achieve bonding of the valve assembly 100, a non-illustrated grounding strap, or some other type of bonding means, is coupled to the electrical bonding connection 112 to allow a bond path to exist between the flow body 102 and the CRN or other ground point.

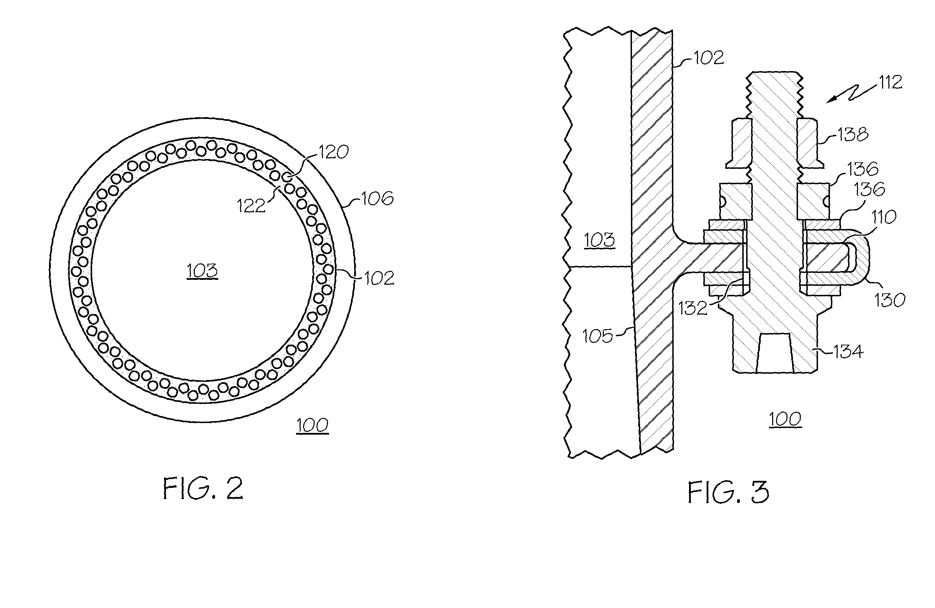

Referring now to FIG. 2, illustrated in a simplified cross-section view take along line 2-2 of FIG. 1, is a portion of the flow body 102. In this particular embodiment, the flow body 102 is formed of a composite material such as conductive thermoplastic having low surface and volume resistivity. More specifically flow body 102 is formed of a resin material 120 having homogeneously suspended therein a fill matrix 122. In a preferred embodiment the fill matrix 122 is comprised of a low surface and volume resistivity fill material or fiber. More particularly, materials that are suitable for the fill matrix 122 and fabrication of the flow body 102 include, but are not limited to, carbon fibers, nickel-coated graphite fibers, carbon nanotubes, metallic powders, stainless steel fibers, PermaStat®, PermaStat PLUS^{™}, or inherently conductive polymers. In a preferred embodiment, the flow body 102 is formed of approximately 70% resin material and 30% low surface and volume resistivity fill matrix. The flow body 102 is fabricated using traditional injection molded processes. In contrast to prior composite valve components, fabrication of flow body 102 using injection molding processes eliminates many of the fabrication steps of embedding conductive meshes, or the like, and results in overall reduced production costs.

Referring now to FIG. 3, illustrated in simplified section view taken along line 3-3 of FIG. 1 is a portion of the flow body 102, including an inner wall 105 of the flow body 102, and the electrical bonding connection 112 of FIG. 1. The electrical bonding connection 112 includes a metallic saddle 130 that is positioned over, and coupled to, the support rib 110 of the flow body 102. To accomplish this, a bore 132 is formed in the support rib 110. Subsequent to positioning of the metallic saddle 130 relative to the support rib 110, a retaining bolt 134 is positioned through the metallic saddle 130 and the support rib 110. The retaining bolt 134 is held in place with a plurality of washers 136 and a nut 138. The electrical bonding connection 112 provides a conductive path to ground for EMI (electromagnetic interference) emissions that may be generated by the actuator, as well as a providing the flow body 102 a conductive path to a ground point for electrostatic discharge (ESD) protection.

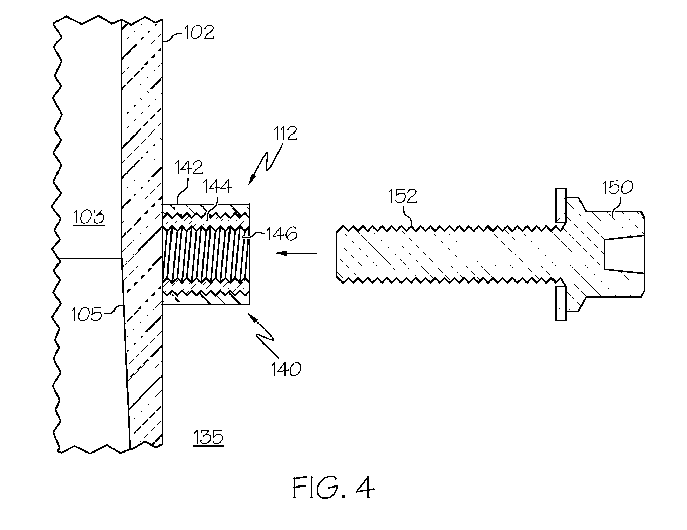

Referring now to FIG. 4, illustrated in simplified section view is a portion of a flow body 135, generally similar to flow body 102 of FIG. 1. The flow body 102 includes an inner wall 105 and an electrical bonding connection 140, generally similar to the electrical bonding connection 112 of FIG. 1. In contrast to the previous embodiment, in this particular embodiment, the electrical bonding connection 140 is formed by molding, within a portion 142 that protrudes from the flow body 102, in generally the same manner as the support ribs 110 of FIG. 1, a metallic threaded insert 144. The metallic threaded insert 144 is molded integral with the flow body 102 and provides for connection to the CRN or other grounding point. A retaining bolt 150, including a plurality of threads 152, is threaded into a plurality of mating threads 146 formed in the metallic threaded insert 144. The retaining bolt 150 connects to the CRN or other grounding point and provides the required electrical bonding connection. The metallic threaded insert 144 and the threaded retaining bolt 150 provide a conductive path to ground for EMI emissions that may be generated by the actuator, as well as a providing the flow body 102 a conductive path to ground for electrostatic discharge (ESD) protection.

The electrical bonding of the composite flow body 102 provides protection for two classes of electromagnetic phenomena that can cause functional upsets in the vehicle equipment, structural damage due to damage from concentrated energy absorption, or be potentially hazardous to personnel. The two classes of electrical bonding that are applicable to composite structures are Class R and Class S. Class R electrical bonding pertains to equipment containing electrical circuits which may produce radio frequencies, either desired or undesired, and requires that they be designed such that a continuous low impedance bonding path is formed from the equipment enclosure or case to the aircraft structure. Class R electrical bonding also requires that this is accomplished through clean metal-to-metal, prepared metal-to-composite, or composite-top-composite contact of mounting plates, racks, brackets, or other structure mating surface. Class S electrical bonding applies to all conductive components of an aircraft that are subject to frictional charging and do not otherwise have a bonding requirements and states that they shall be bonded to the aircraft structure with a total path resistance of 1 ohm or less. Class R electrical bonding states that the bonding paths shall be accomplished through mechanical contact of components and shall be configured to include the minimum number of interfaces consistent with accepted design practice for that type of equipment. The electrical bonding connection 112 and the electrical bonding connection 140 as previously described meet Class R and Class S bonding requirements.

Accordingly, disclosed is an improved composite valve flow body including a means for bonding the valve flow body to dissipate static electricity. While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A non-metallic valve assembly (100) configured to dissipate electrostatic discharge, the valve assembly (100) comprising:
a thermoplastic injection molded flow body (102) having at least one inlet port (101), at least one outlet port (109), and a flow passage (103) there between; and
an electrical bonding connection (112) coupled to the thermoplastic injection molded flow body (102) and providing a bonding path between the thermoplastic injection molded flow body (102) and an external ground point.

2. The valve assembly (100) as claimed in claim 1, wherein the thermoplastic injection molded flow body (102) is formed of a resin having a fill matrix (122) suspended therein

3. The valve assembly (100) as claimed in claim 2, wherein the fill matrix (122) is a low surface and low volume resistivity material.

4. The valve assembly (100) as claimed in claim 3, wherein the fill matrix (122) is one of a filler material or a fiber.

5. The valve assembly (100) as claimed in claim 4, wherein the fill matrix (122) is selected from the group consisting of: carbon fiber, carbon powder, stainless steel fiber, nickel-coated graphite, a polymeric material, conductive polymer, and polymeric materials.

6. The valve assembly (100) as claimed in claim 1, wherein the thermoplastic injection molded flow body (102) includes at least one support rib (110) protruding there from a surface of the flow body (102).

7. A non-metallic valve assembly (100) configured to dissipate electrostatic discharge, the valve assembly (100) comprising:
a thermoplastic injection molded flow body (102) having at least one inlet port (101), at least one outlet port (109), and a flow passage (103) there between, the flow body (102) formed of a resin material (120) having a low surface and low volume resistivity fill matrix (122) suspended therein; and
an electrical bonding connection (112) providing a bonding path between the thermoplastic injection molded flow body (102) and an external ground point.

8. The valve assembly (100) as claimed in claim 7, wherein the fill matrix (122) is selected from the group consisting of: a plurality of carbon fibers, a carbon powder, a plurality of stainless steel fiber, nickel-coated graphite, a polymeric material, conductive polymer, and polymeric materials.

9. The valve assembly (100) as claimed in claim 7, wherein the thermoplastic injection molded flow body (102) includes at least one support rib (110) protruding there from a surface of the flow body (102).

10. The valve assembly (100) as claimed in claim 9, wherein the electrical bonding connection (112) includes a metallic saddle (130) and a retaining bolt (134) mechanically retaining the metallic saddle (130) to the support rib (110) of the valve flow body (102), the retaining bolt (134) and the metallic saddle (130) capable of providing a bonding path between the thermoplastic injection molded flow body (102) and an external ground point.
